# DEMANDE DE BREVET EUROPEEN

(11) **EP 0 921 350 A1**
(43) Date de publication de la demande: **09.06.1999**
(21) Numéro de dépôt: 98402904.1
(22) Date de dépôt: 20.11.1998
(51) Int. Cl.: F23D 14/22, F23D 14/32, F23D 14/72

(54) **Bruleur oxy-combustible**

(30) Priorité: 02.12.1997 FR 9715162
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Arnoux, Stéphane, 78370 Plaisir (FR); Robillard, Dominique, 78000 Versailles (FR)
(74) Mandataire: Vesin, Jacques

(57) **Abrégé**

Le brûleur oxy-combustible comporte au moins une conduite (16) d'amenée de combustible et au moins une conduite (18) d'amenée d'un gaz riche en oxygène, lesdites sorties des conduites étant dirigées sensiblement dans une même direction, le brûleur étant adapté pour être monté au travers d'une paroi d'un four avec les conduites dirigées vers l'intérieur du four. Il porte au moins un organe auxiliaire (50, 60) destiné à agir sur la flamme, et ledit organe auxiliaire (50, 60) est disposé sur le brûleur en amont de la zone de rencontre du gaz combustible et du gaz riche en oxygène.

## Description

La présente invention concerne un brûleur oxy-combustible du type comportant au moins une conduite d'amenée de combustible et au moins une conduite d'amenée d'un gaz riche en oxygène, lesdites sorties des conduites étant dirigées sensiblement dans une même direction, le brûleur étant adapté pour être monté au travers d'une paroi d'un four avec les conduites dirigées vers l'intérieur du four.

De tels brûleurs sont utilisés notamment dans des fours de fusion d'émaux ou de fusion d'aluminium. Ils sont disposés au travers de la paroi du four par l'intermédiaire d'une brique évidée de part en part, dénommée ouvreau. Les extrémités de sortie des conduites d'amenée de combustible et d'amenée de gaz riche en oxygène débouchent dans le passage de l'ouvreau. Ce dernier a généralement un profil divergent vers l'intérieur du four. La racine de la flamme se situe à l'intérieur de l'ouvreau dans la zone de rencontre et de mélange du combustible et du gaz riche en oxygène.

Afin de permettre l'allumage d'un brûleur dans une enceinte dans laquelle règne une température inférieure à la température d'auto-inflammation du combustible, il est nécessaire de mettre en oeuvre un dispositif d'allumage du brûleur. Aussi, est-il connu de prévoir un tel dispositif dans la paroi du four. Afin de rapprocher le dispositif d'allumage de la zone de rencontre du combustible et du gaz riche en oxygène, le dispositif d'allumage est généralement disposé dans un conduit ménagé dans l'ouvreau et débouchant dans le passage traversant de celui-ci.

De même, afin de contrôler la présence de la flamme en sortie du brûleur, il est connu de prévoir des moyens de détection du rayonnement ultraviolet au voisinage de la zone d'accrochage de la flamme. Ces moyens comportent par exemple une cellule de détection du rayonnement ultraviolet. Celle-ci est logée dans un conduit ménagé dans l'ouvreau et débouchant dans le passage de celui-ci.

Les ouvreaux sont réalisés en matériau réfractaire. La présence des conduits débouchant dans le passage traversant des ouvreaux fragilise la structure de ceux-ci. De plus, ces conduits débouchants dégradent les conditions d'écoulement du flux gazeux à l'intérieur du passage divergent.

L'invention a pour but de résoudre le problème mentionné ci-dessous, en fournissant un brûleur équipé de dispositifs auxiliaires tels qu'un dispositif d'allumage ou un dispositif d'analyse de la flamme sans que cela nuise à la résistance mécanique de l'ouvreau et à la qualité de l'écoulement des gaz dans celui-ci.

A cet effet, l'invention a pour objet un brûleur oxy-combustible du type précité, caractérisé en ce qu'il porte au moins un organe auxiliaire destiné à agir sur la flamme, et en ce que ledit organe auxiliaire est disposé sur le brûleur en amont de la zone de rencontre du gaz combustible et du gaz riche en oxygène.

Suivant des modes particuliers de réalisation, le brûleur comporte l'une ou plusieurs des caractéristiques suivantes :
- il comporte un corps renfermant lesdites conduites, lequel corps est ouvert uniquement vers l'intérieur du four et comporte au moins un piquage de raccordement sur une source d'alimentation en gaz riche en oxygène, le corps délimitant ainsi ladite conduite d'amenée du gaz riche en oxygène, le corps est traversé par la ou chaque conduite d'amenée du combustible et le ou chaque organe auxiliaire est rapporté sur le corps, de sorte qu'il est balayé par le flux de gaz riche en oxygène lors de l'alimentation du brûleur en gaz riche en oxygène ;
- la ou chaque conduite d'amenée du combustible traversant le corps est montée de manière amovible sur celui-ci ;
- le ou chaque organe auxiliaire comporte un axe principal de fonctionnement et le ou chaque axe principal délimite, avec ladite direction de sortie des conduites , un angle compris entre 0 et 45° et avantageusement compris entre 0 et 20° ;
- le ou chaque organe auxiliaire est orienté pour agir dans la zone d'accrochage de la flamme ;
- l'un des organes auxiliaires comporte un dispositif d'allumage de la flamme ;
- le dispositif d'allumage de la flamme comportent un tube d'alimentation d'une flamme d'allumage, lequel tube a son extrémité de sortie disposée en amont de la zone de rencontre du combustible avec le gaz riche en oxygène, à une distance comprise entre 2 et 10 cm.
- l'un des organes auxiliaires comporte un hublot ;
- l'un des organes auxiliaires comporte un dispositif d'analyse de la flamme.
- ledit dispositif d'analyse de la flamme comporte une cellule de mesure de l'intensité lumineuse produite par la flamme dans le domaine des ultraviolets, et ladite cellule est reliée à des moyens de comparaison de l'intensité mesurée à au moins deux valeurs de seuil prédéterminées pour en déduire un état de fonctionnement incorrect du brûleur.

L'invention sera mieux comprise à la lecture de la description qui va suivre, donnée uniquement à titre d'exemple et faite en se référant aux dessins sur lesquels :
- la figure 1 est une vue en coupe longitudinale d'un brûleur selon l'invention associé à un ouvreau de four à verre ;
- la figure 2 est une vue en coupe transversale du brûleur de la figure 1 prise suivant la ligne II-II ;
- les figures 3 et 4 sont des vues en coupe longitudinale d'une variante de réalisation du brûleur selon l'invention, ces coupes étant faites suivant les lignes III-III et IV-IV de la figure 5 ; et
- la figure 5 est une vue en coupe transversale du brûleur des figures 3 et 4 prise suivant la ligne V-V de la figure 3.

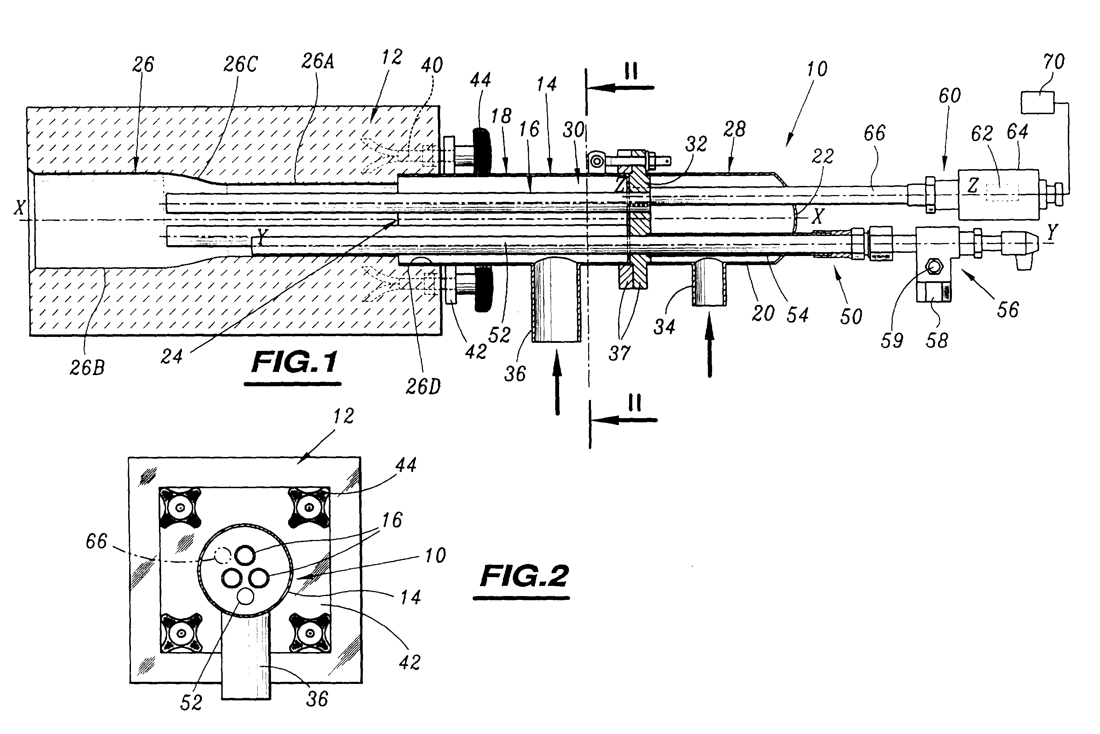

Sur la figure 1 est représenté un brûleur oyx-combustible 10 associé à un ouvreau 12.

Le brûleur 10 comporte un corps 14 contenant trois conduites ou cannes 16 d'amenée d'un gaz combustible dans l'ouvreau. Le corps 14 délimite une conduite 18 d'amenée d'oxygène impur à l'intérieur de l'ouvreau.

Le corps 14 comporte une coque ou enveloppe 20 de forme générale cylindrique d'axe X-X. Elle est obturée à son extrémité arrière par un fond 22 en forme de calotte sphérique. La coque 20 est débouchante sur toute sa section à son extrémité avant par une ouverture 24 en communication avec un passage traversant 26 de l'ouvreau.

La coque 20 délimite deux chambres successives, notées 28, 30. Ces deux chambres sont séparées par une paroi transversale 32.

La chambre 28 s'étend entre la paroi 32 et le fond 22 alors que la chambre 30 s'étend entre la paroi 32 et l'ouverture 24. La chambre 28 est destinée à la réception du gaz combustible issu d'un piquage 34 ménagé dans la paroi latérale de la coque 20. Le piquage 34 débouche directement dans la chambre 28 et comporte des moyens non représentés de liaison à une source de gaz combustible.

Les trois cannes 16 sont formées par trois tubes de même longueur s'étendant parallèlement les uns aux autres et définissant en section un triangle équilatéral. Ces trois tubes communiquent avec la chambre de gaz combustible 28 au travers de la paroi 32. Ils s'étendent parallèlement à l'axe du corps 14 et traversent de part en part la chambre 30.

L'extrémité des trois cannes 16 fait saillie en dehors du corps 14 et débouchent axialement dans le passage 26 de l'ouvreau.

La chambre 30 est destinée à la réception du gaz riche en oxygène acheminé par un piquage latéral 36 traversant la paroi latérale de la coque 20. Le piquage 36 débouche directement dans la chambre 30 et comporte des moyens non représentés de liaison à une source de gaz riche en oxygène, par exemple de l'oxygène impur obtenu par distillation de l'air. La paroi latérale cylindrique du corps définit sur la longueur de la chambre 30 la conduite 18 d'amenée du gaz riche en oxygène qui débouche dans le passage 26 de l'ouvreau par l'intermédiaire de l'ouverture 24.

Avantageusement, la coque 20 est réalisée en deux parties coaxiales, reliées l'une à l'autre au niveau de la paroi 32 par deux brides 37 et un ensemble de boulons.

L'ouvreau 12 est constitué par une brique en matériau réfractaire de forme extérieure parallélépipédique. Il est traversé de part en part suivant sa plus grande longueur par le passage 26. Ce dernier comporte en entrée, en considérant le sens d'écoulement des gaz, un tronçon cylindrique 26A de section réduite prolongé en sortie par un tronçon cylindrique coaxial 26B de plus grand diamètre. Les deux tronçons 26A, 26B sont reliés l'un à l'autre par un divergent 26C dans lequel le diamètre du passage augmente progressivement suivant le sens d'écoulement des gaz.

En entrée, le tronçon 26A comporte un lamage 26D dont le diamètre extérieur est légèrement supérieur au diamètre extérieur de la paroi latérale de la coque 20.

En outre, l'ouvreau comporte sur sa face extérieure au four quatre ancrages 40 scellés dans le matériau réfractaire et dont l'extrémité faisant saillie est formée par un tronçon de tige filetée.

Afin d'assurer la fixation du brûleur sur l'ouvreau, la coque 20 comporte extérieurement une bride 42 munie de perçages de réception des tronçons filetés des ancrages 40, afin d'assurer la solidarisation du brûleur et de l'ouvreau à l'aide de quatre écrous 44.

Comme représenté sur la figure 1, l'extrémité de sortie des trois conduits 16 se trouve sensiblement dans le divergent 26C.

Conformément à l'invention, le corps comporte deux organes auxiliaires destinés à agir sur la flamme. Ces organes sont disposés en amont de la zone de rencontre du gaz combustible et du gaz riche en oxygène.

En particulier, le corps porte un dispositif 50 d'allumage de la flamme. Celui-ci comporte une conduite 52 d'alimentation en mélange combustible. Elle s'étend suivant l'axe Y-Y parallèlement à l'axe X-X du brûleur. La conduite 52 traverse de part en part la chambre 28 au travers d'un tunnel 54 délimité par un tube coaxial de plus grand diamètre reliant le fond 22 à la paroi 32.

La conduite 52 est munie à son extrémité arrière, c'est-à-dire son extrémité faisant saillie extérieurement par rapport au fond 22, de moyens 56 de prémélange pour la fourniture du mélange combustible à l'extrémité opposée de la conduite 52. Ces moyens, de tout type adapté, comportent un connecteur 58 de liaison sur une source de combustible non représentée, par exemple du gaz naturel ou du propane et une ouverture 59 d'arrivée d'air.

Le tube 52 débouche à son extrémité libre dans l'ouvreau en amont de l'extrémité de sortie des trois tubes 16. La distance séparant les extrémités de sortie des trois cannes 16 de celle du tube 52, mesurée suivant l'axe X-X est avantageusement comprise entre 2 et 10 cm et est par exemple égale 5 cm.

Par ailleurs, le brûleur comporte un second organe auxiliaire noté 60 formé par un dispositif d'analyse de la flamme. Celui-ci comporte une cellule 62 de mesure de l'intensité lumineuse de la flamme pour des longueurs d'onde correspondant à l'ultraviolet. Cette cellule est logée dans un boîtier cylindrique 64 ouvert à une extrémité. Il est prolongé par un tube 66 traversant de part en part la chambre 28. Ainsi, le tube 66 traverse d'une part le fond 22 et d'autre part la paroi transversale 32 pour déboucher librement dans la chambre 30.

L'axe Z-Z du tube 66 s'étend parallèlement à l'axe X-X du brûleur et la cellule 62 est disposée suivant l'axe Z-Z.

Comme représenté sur la figure 2, les tubes 52 et 66 sont intercalés angulairement entre deux cannes 16 d'amenée du gaz combustible. Sur cette figure la position du tube 66 est représentée en trait mixte puisque celui-ci n'est pas en fait dans le plan de coupe.

A son extrémité arrière, le boîtier 64 comporte un passage étanche de sortie pour des fils électriques reliant la cellule 62 à une unité de traitement d'informations 70.

L'unité de traitement d'informations 70 est adaptée pour analyser le fonctionnement du brûleur en vue de détecter des anomalies. A cet effet, elle comporte par exemple un convertisseur analogique/numérique assurant la conversion des signaux issus de la cellule 62 en un signal numérique. Le convertisseur analogique/numérique est relié à une unité logique comportant par exemple un microprocesseur.

Ce dernier est programmé afin de comparer l'intensité 1 mesurée par la cellule 62 à un ensemble d'au moins deux valeurs de seuil prédéterminées afin d'en déduire un éventuel état de fonctionnement incorrect du brûleur.

En particulier, l'ensemble des valeurs de seuil comporte au moins une première valeur de seuil I₁, par exemple égale à environ 115 % de l'intensité normale I₀ de fonctionnement du brûleur. Si l'intensité mesurée par la cellule dépasse cette première valeur de seuil I₁, l'unité de traitement d'informations 70 déduit qu'il se produit une entrée de flamme dans le brûleur en amont du tronçon 26B, ce qui constitue un risque de destruction de la structure de celui-ci.

Une seconde valeur de seuil prédéterminée I₂, correspondant par exemple à 85 % de l'intensité normale I₀ de fonctionnement du brûleur, permet de détecter un éventuel décrochage de flamme, ou un encrassement des cannes 16, si l'intensité mesurée par la cellule 62 est inférieure à cette seconde valeur de seuil prédéterminée I₂.

Le brûleur représenté sur les figures 1 et 2 fonctionne de la manière suivante. Afin d'assurer l'allumage du brûleur, on actionne d'abord le dispositif d'allumage 50. A cet effet, on alimente les moyens de prémalange 56, afin que du mélange combustible s'écoule à l'extrémité ouverture du tube 52. Par l'intermédiaire d'un élément piézo-électrique non représenté, on engendre une étincelle à l'extrémité ouverte du tube 52 afin d'enflammer le mélange.

Afin de procéder à l'allumage du brûleur proprement dit, on alimente celui-ci en gaz combustible, par exemple du gaz naturel (formé essentiellement de méthane) par l'intermédiaire du piquage 34. Simultanément, on alimente le brûleur en oxygène impur par l'intermédiaire du piquage 36.

On comprend que le gaz combustible emplit la chambre 28 et s'écoule ensuite au travers des trois cannes 16. L'oxygène emplit la chambre 30 puis s'écoule à l'extrémité ouverte de la coque 20 directement dans le tronçon de petit diamètre 26A du passage traversant l'ouvreau.

Lorsque l'oxygène et le gaz naturel entrent en contact dans la zone située à l'aval à la fois de la conduite 18 d'alimentation en oxygène délimitée par la paroi latérale de la coque, et en aval de la sortie des trois cannes 16, le gaz combustible s'enflamme au contact de l'oxygène sous l'action de la flamme entretenue à l'extrémité du tube 52.

On comprend ainsi que la flamme du brûleur prend naissance à l'extrémité de sortie des trois cannes 16 dans le tronçon élargi 26B de l'ouvreau constituant la zone de mélange du gaz combustible et de l'oxygène.

Le dispositif d'allumage 50 peut alors être arrêté, de sorte que la flamme d'allumage s'éteint.

Pendant le fonctionnement du brûleur, la cellule photoélectrique 62 mesure en permanence l'intensité lumineuse rayonnée dans l'ultraviolet par la flamme dans la zone d'accrochage de celle-ci. Comme expliqué précédemment, l'intensité mesurée est comparée aux valeurs de seuil prédéterminées I₁ et I₂ pour détecter une éventuelle anomalie de fonctionnement du brûleur.

Lors du fonctionnement du brûleur, les organes auxiliaires 50 et 60 étant disposés en amont de la zone de mélange du gaz combustible et de l'oxygène, ceux-ci ne sont en contact au plus qu'avec l'un des gaz. Aussi, ceux-ci ne sont pas exposés directement à la chaleur de la flamme entretenue à l'extrémité du brûleur.

Les risques d'endommager le tube 52 ou la cellule 62 sont donc réduits.

De plus, le tube 52, ou l'extrémité du dispositif d'analyse de la flamme, sont en permanence balayés par le flux d'oxygène circulant. Aussi, ceux-ci sont continuellement refroidis, ce qui réduit considérablement les risques de destruction sous l'action de la chaleur rayonnée par la flamme.

Par ailleurs, dans les dispositifs de l'état de la technique, l'allumeur ou le dispositif d'analyse de la flamme étant disposés dans des conduits auxiliaires ménagés dans l'ouvreau et débouchant dans le passage traversant de celui-ci, il est nécessaire d'assurer la circulation d'un flux gazeux de refroidissement dans le conduit dans lequel est logé l'organe auxiliaire afin d'assurer en permanence son refroidissement. Le gaz utilisé pour le refroidissement est généralement de l'air.

L'introduction de tels flux de refroidissement est préjudiciable au bon fonctionnement du four et peut être à l'origine d'une pollution importante, notamment due aux oxydes d'azote lorsque le flux de refroidissement est de l'air, l'azote de l'air réagissant avec l'oxygène introduit dans le four.

Avec le brûleur selon l'invention, la suppression du balayage à l'air des organes auxiliaires réduit considérablement la production d'oxyde d'azote.

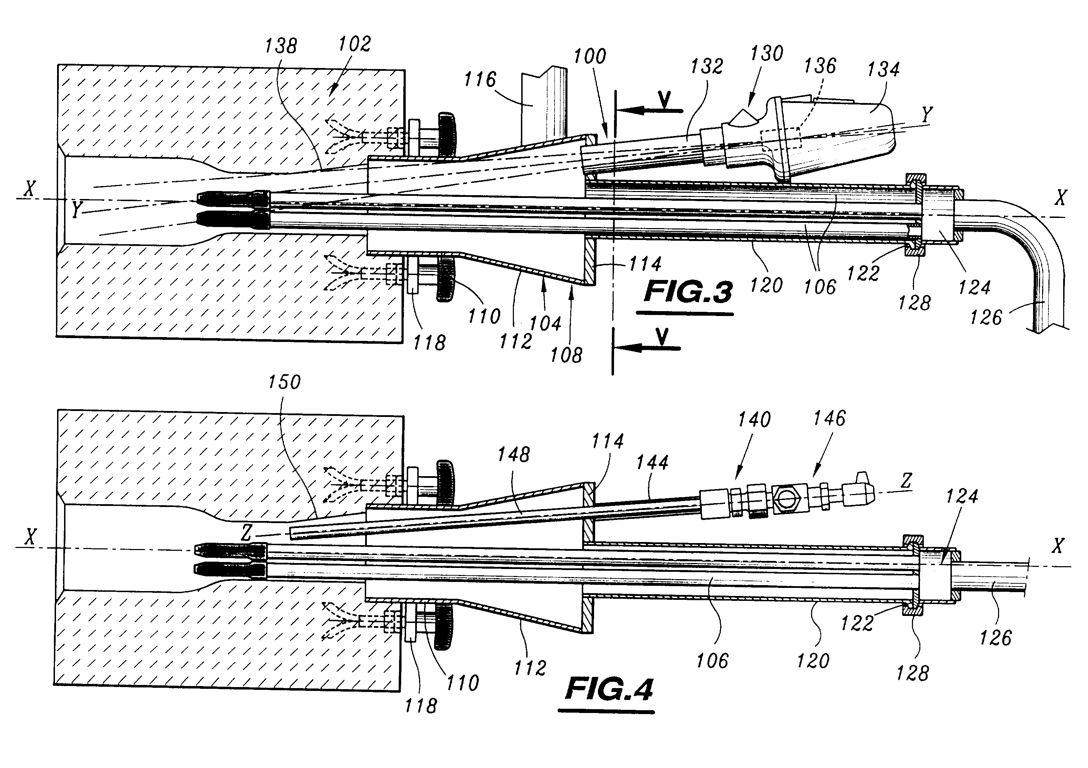

Sur les figures 3 à 5 est représentée une variante de réalisation du brûleur désigné par la référence 100 associé à un ouvreau 102.

L'ouvreau 102 est sensiblement analogue à l'ouvreau 12 du mode de réalisation précédent et seules les caractéristiques additionnelles seront décrites dans la suite de la description.

Le brûleur 100 comporte d'une part un corps 104 délimitant une conduite d'acheminement d'un gaz riche en oxygène vers l'entrée de l'ouvreau et d'autre part un ensemble de trois conduites ou cannes 106 d'acheminement d'un gaz combustible.

Le corps 104 est délimité par une coque 108 axisymétrique d'axe X-X comportant à l'avant un tronçon cylindrique 110 de raccordement à l'ouvreau. Le tronçon 110 est prolongé en amont par un tronçon tronconique 112 dont le diamètre croît progressivement jusqu'à une paroi de fond 114.

Un piquage 116 de connexion sur une source de gaz riche en oxygène non représentée est ménagé sur la paroi latérale du tronçon tronconique 112.

Afin d'assurer la solidarisation du brûleur sur l'ouvreau, le tronçon de raccordement 110 porte une bride extérieure 118 analogue à la bride 42 du mode de réalisation des figures 1 et 2.

La paroi de fond 114 est traversée par un tube 120 se prolongeant uniquement à l'extérieur de la coque 108 parallèlement à l'axe X-X. Ce tube est destiné au support des trois cannes d'injection 106.

Il comporte, à son extrémité libre, une bride 122 adaptée pour recevoir un embout 124 portant les trois cannes 106. L'embout 124 est prolongé par une conduite 126 de raccordement sur une source d'alimentation en gaz combustible non représentée. L'embout 124 est relié sur la bride 122 par l'intermédiaire d'une bague de maintien démontable 128.

La bague 128 assure une liaison étanche entre le tube 120 et l'embout 124. De plus, elle assure un maintien mécanique des cannes 106 rigoureusement suivant une direction parallèle à l'axe X-X du brûleur.

Par ailleurs, comme représenté sur la figure 3, un dispositif 130 d'analyse de flamme est monté sur la paroi arrière 114. Celui-ci comporte un tube de liaison 132 débouchant à l'intérieur du corps 104. A son extrémité libre, le tube 132 porte un boîtier étanche 134 dans lequel est confinée une cellule 136 de mesure de l'intensité lumineuse dans le domaine ultraviolet. Cette dernière est dirigée suivant l'axe Y-Y du tube 132. L'axe Y-Y définit un angle de 7,5° avec l'axe X-X du brûleur. La cellule 136 est reliée à une unité de traitement d'informations analogue à l'unité 70.

Comme représenté sur la figure 3, l'axe Y-Y rencontre l'axe X-X du brûleur sensiblement dans le plan de sortie des cannes d'injection 106, c'est-à-dire dans la zone d'accrochage de la flamme.

Afin de dégager le champ de visée de la cellule 136, le premier tronçon de section réduite de l'ouvreau 102 comporte latéralement un dégagement 138 formant une rainure longitudinale dans le passage de l'ouvreau.

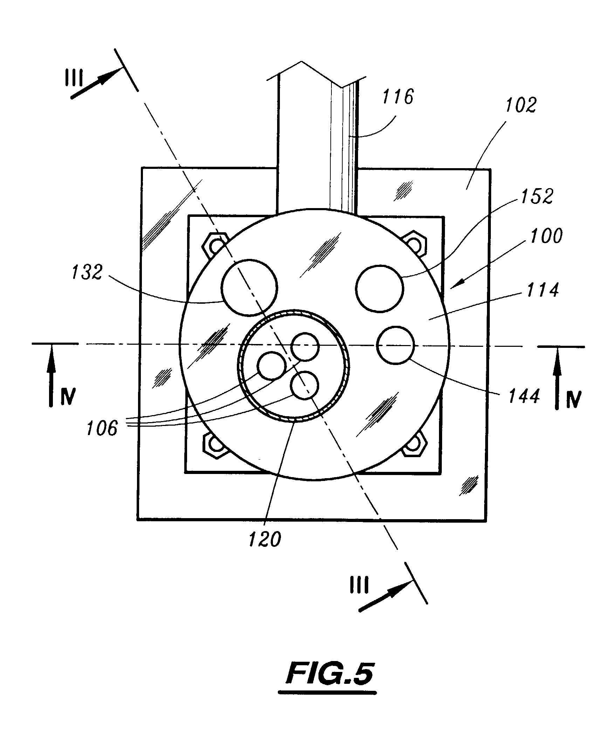

Par ailleurs, le brûleur comporte un dispositif d'allumage 140. Ce dernier, représenté sur la figure 4, est fixé sur le fond 114. A cet effet, le fond comporte une ouverture circulaire 142 prolongée extérieurement par un tube de support 144. Celui-ci débouche à l'intérieur de la coque 108. L'axe Z-Z du tube 144 définit avec l'axe X-X de l'ensemble des cannes 106 un angle d'environ 5°.

Des moyens de prémélange 146 comportant, à une extrémité, un connecteur de raccordement sur une source de mélange combustible non représentée sont portés à l'extrémité libre du tube 144. L'autre extrémité des moyens de prémélange 146 est prolongée par un tube 148 engagé à l'intérieur du tube 144 et se prolongeant au travers de la coque 108. L'extrémité libre du tube 148 débouche dans l'ouvreau en amont du plan de sortie des cannes 106. En particulier, la distance séparant les extrémités du tube 148 et des cannes 106 est par exemple de 5 cm.

Afin de permettre le passage du tube 148 dans le tronçon de diamètre réduit de l'ouvreau, celui-ci comporte un second dégagement 150 décalé angulairement par rapport au premier dégagement 138.

Enfin, comme représenté sur la figure 5, le fond 114 comporte un hublot 152 formé par un disque en matériau transparent fixé de manière étanche au travers du fond 114. Ce hublot permet un accès visuel à l'intérieur du brûleur et notamment une visualisation de la flamme lorsque le brûleur fonctionne.

On comprend qu'avec l'agencement des organes auxiliaires prévus dans cette variante de réalisation, ceux-ci sont également protégés du rayonnement thermique provenant de la flamme entretenue par le brûleur, puisque les organes auxiliaires sont disposés en amont de la zone de mélange du gaz combustible et du gaz riche en oxygène. De plus, comme précédemment, les trois organes auxiliaires sont balayées par le flux de gaz riche en oxygène, ce qui leur assure un refroidissement continu.

Dans ce mode de réalisation, l'ensemble des cannes 106 d'injection du gaz combustible est monté de manière amovible sur l'extrémité du tube 120. Ainsi, le remplacement des cannes 106, et les opérations de maintenance préventives pratiquées sur celles-ci peuvent s'effectuer facilement sans qu'il soit nécessaire de démonter les organes auxiliaires portés directement par le corps 104.

En effet, le retrait des seules cannes 106 peut être effectué en déverrouillant la bague 128 et en extrayant l'embout 124 supportant les cannes.

Dans les deux modes de réalisation, la présence du dispositif d'allumage en arrière de la zone de mélange du gaz combustible et du gaz riche en oxygène favorise un bon accrochage de la flamme à l'extrémité des cannes d'injection, quel que soit le combustible utilisé dans le brûleur. En effet, avec cette disposition, l'allumage s'effectue immédiatement à la sortie des cannes d'injection.

Au contraire, dans les dispositifs de l'état de la technique dans lesquels le dispositif d'allumage débouche dans l'ouvreau, l'allumage du mélange s'effectue dans l'ouvreau à une certaine distance de la sortie des cannes d'injection, de sorte que le combustible doit subir une inflammation progressive en sens inverse de l'écoulement du flux afin d'assurer l'accrochage de la flamme. Un tel cheminement du front de combustion ne s'effectue pas toujours de manière satisfaisante notamment lorsque le combustible est un combustible liquide et que le flux de combustible est important.

Bien entendu, les entrées de combustible et du gaz riche en oxygène peuvent être inversées, tout en conservant une bonne protection des organes auxiliaires, qui sont alors en contact avec uniquement le combustible.

L'analyse de la flamme, à partir de la seule mesure de l'intensité du rayonnement ultraviolet est rendue possible puisque, contrairement à ce que l'on aurait pu penser, l'intensité rayonnée ne varie pas avec la puissance du brûleur. Ainsi, quel que soit le débit imposé au gaz combustible et au gaz riche en oxygène dans le brûleur, l'intensité mesurée dans la zone d'accrochage de la flamme reste quasi-constante.

Une hypothèse vraisemblable tendant à expliquer ce phénomène consiste à admettre que la zone de mélange, située immédiatement en aval du plan d'injection des cannes de combustible, est saturée en rayons ultraviolets quel que soit le débit de gaz combustible. Ainsi, le positionnement du dispositif de mesure en amont de la zone d'injection, qui permet une visée de la zone de mélange immédiatement en sortie des cannes d'injection, c'est-à-dire la zone d'accrochage de la flamme permet une mesure de l'intensité qui ne dépend pas de la puissance thermique fournie par le brûleur, permettant ainsi la mise en oeuvre simple d'une analyse du signal afin d'en déduire l'état de fonctionnement du brûleur.

## Revendications

1. Brûleur oxy-combustible comportant au moins une conduite (16 ; 106) d'amenée de combustible et au moins une conduite (18, 108) d'amenée d'un gaz riche en oxygène, lesdites sorties des conduites étant dirigées sensiblement dans une même direction (X-X), le brûleur étant adapté pour être monté au travers d'une paroi d'un four avec les conduites dirigées vers l'intérieur du four, caractérisé en ce qu'il porte au moins un organe auxiliaire (50, 60 ; 130, 140, 152) destiné à agir sur la flamme, et en ce que ledit organe auxiliaire (50, 60 ; 130, 140, 152) est disposé sur le brûleur en amont de la zone de rencontre du gaz combustible et du gaz riche en oxygène.

2. Brûleur selon la revendication 1, caractérisé en ce qu'il comporte un corps (14, 104) renfermant lesdites conduites, lequel corps est ouvert uniquement vers l'intérieur du four et comporte au moins un piquage (36 ; 116) de raccordement sur une source d'alimentation en gaz riche en oxygène, le corps délimitant ainsi ladite conduite (18) d'amenée du gaz riche en oxygène, en ce que le corps est traversé par la ou chaque conduite (16 ; 106) d'amenée du combustible et en ce que le ou chaque organe auxiliaire (50 ; 60 ; 130, 140, 152) est rapporté sur le corps, de sorte qu'il est balayé par le flux de gaz riche en oxygène lors de l'alimentation du brûleur en gaz riche en oxygène.

3. Brûleur selon la revendication 2, caractérisé en ce que la ou chaque conduite (106) d'amenée du combustible traversant le corps (104) est montée de manière amovible sur celui-ci.

4. Brûleur selon l'une quelconque des revendications précédentes, caractérisé en ce que le ou chaque organe auxiliaire (50 , 60 ; 130, 140, 152) comporte un axe principal de fonctionnement (Y-Y, Z-Z) et en ce que le ou chaque axe principal délimite, avec ladite direction (X-X) de sortie des conduites (16, 18 ; 106, 108), un angle compris entre 0 et 45° et avantageusement compris entre 0 et 20°.

5. Brûleur selon l'une quelconque des revendications précédentes, caractérisé en ce que le ou chaque organe auxiliaire est orienté pour agir dans la zone d'accrochage de la flamme.

6. Brûleur selon l'une quelconque des revendications précédentes, caractérisé en ce que l'un des organes auxiliaires comporte un dispositif (50 ; 140) d'allumage de la flamme.

7. Brûleur selon la revendication 6, caractérisé en ce que le dispositif d'allumage de la flamme comportent un tube (52 ; 148) d'alimentation d'une flamme d'allumage, lequel tube (52 ; 148) a son extrémité de sortie disposée en amont de la zone de rencontre du combustible avec le gaz riche en oxygène, à une distance comprise entre 2 et 10 cm.

8. Brûleur selon l'une quelconque des revendications précédentes, caractérisé en ce que l'un des organes auxiliaires comporte un hublot (152).

9. Brûleur selon l'une quelconque des revendications précédentes, caractérisé en ce que l'un des organes auxiliaires comporte un dispositif (60 ; 130) d'analyse de la flamme.

10. Brûleur selon la revendication 9, caractérisé en ce que ledit dispositif (60 ; 130) d'analyse de la flamme comporte une cellule (62 ; 136) de mesure de l'intensité lumineuse produite par la flamme dans le domaine des ultraviolets, et en ce que ladite cellule (62 ; 136) est reliée à des moyens (70) de comparaison de l'intensité mesurée à au moins deux valeurs de seuil prédéterminées (I₁, I₂) pour en déduire un état de fonctionnement incorrect du brûleur.
